# EUROPEAN PATENT SPECIFICATION

(11) **EP 1 850 672 B1**
(45) Date of publication and mention of the grant of the patent: **06.03.2013**
(21) Application number: 06719349.0
(22) Date of filing: 25.01.2006
(51) Int. Cl.: A21D 13/00, A23L 1/03, A23L 1/10, A23L 1/164, A21D 2/02

(54) **INSTANT MASA**
INSTANT-MASA
MASA INSTANTANEE

(30) Priority: 10.02.2005 US 54845; 25.01.2006 US 339284
(43) Date of publication of application: 07.11.2007
(73) Proprietor: Sabritas, S. de R.L. de C.V.., Mexico, D.F. 1100 (MX)
(72) Inventor: RIVERO-JIMENEZ, Carmela, Mexico D.F, CP 11590 (MX); QUINTANAR-GUZMAN, Adriana, Toluca, Estado De Mexico, CP 50180 (MX)
(74) Representative: Jenkins, Peter David
(86) International application number: PCT/US2006/002451
(87) International publication number: WO 2006/086149

(56) References cited:
- US-A- 6 025 011
- US-A- 6 068 873

## Description

### BACKGROUND OF THE INVENTION

### 1. Technical Field.

The present invention refers to an accelerated and environmentally advantageous process for nixtamalization of corn for the preparation of tortillas, tortilla chips, and corn chips. The invention uses specific processing steps to process ground corn fractions mixed with various gelatinization agents as a substitute for the traditional nixtamalization process.

### 2. Description of Related Art.

Corn was the principal source of food for the pre-Columbian civilizations of the New World. Today corn tortillas and derivative products are still the staple food of Mexico and Central America. Also, corn tortilla, corn chips, and tortilla chips have widely penetrated the market of the United States and some countries of Asia and Europe.

*Nixtamalization,* also known as alkaline cooking, is the traditional process for making corn masa used as the base ingredient for many Mexican-style corn products, such as corn tortillas, tortilla chips, taco shells, tostadas, tamales, and corn chips. It is believed that ancient Central Americans cooked maize in a dispersion of wood ashes or lime to produce corn tortillas, their major form of bread. This ancient technique, having undergone little changes, still involves cooking and steeping whole kernel corn in a solution of lime (calcium hydroxide). Nixtamalization transforms corn so it can be stone ground to form dough called masa that is subsequently sheeted, formed and cut in preparation of tortillas and related snack or food products.

The traditional method to process corn into tortillas (nixtamalization) goes back to early Mesoamerican civilizations, and the basic steps of the process have remained basically unaltered since. In the traditional process, whole corn is cooked in a boiling water-lime (or water-ash) solution for a short time (5-45 min) and steeped in this solution, as it cools, for a period of 12 to 18 hours. The cooking liquor, called nejayote, is discarded; with it is lost the fraction of the pericarp and germ dissolved in the nejayote. The cooked, steeped, and drained corn grains (nixtamal) are washed to remove excess lime. Here again, a part of pericarp and germ material is lost. The total corn fraction lost varies from 5 to 15%. The highly alkaline (pH 11-12) nejayote, is rich in corn solids and excess lime and is a waste product of both traditional nixtamalization and instant masa flour production. The nixtamal is ground with a pestle and stone into masa. Finally, the masa is flattened into thin disks that are cooked on a hot griddle for 30-60 seconds on each side to produce tortillas. Tortillas prepared by the traditional method just described generally show excellent rheological characteristics, such as puffing and elastic strength.

The major disadvantage of nixtamalization of whole kernel corn is related to alkaline waste and wastewater disposal. The cook steep liquor, *nejayote*, is an unavoidable by-product of the nixtamalization procedures and is a potential dangerous environmental effluent due to its composition and alkalinity. The proper disposal of the excess wastewater generated during nixtamalization is a major concern during commercial masa production, because wastewater discharge must typically meet specific regulatory requirements. As a result, methods of nixtamalizing corn that reduce effluent production would be both environmental and economically desirable.

Alkaline cooking, steeping and washing of corn also cause partitioning of corn in solids between the masa and the wastewater. Loss of corn solids (i.e., yield loss) during nixtamalization and effluent processing and clean-up costs are considerable. In a commercial operation, corn solids loss has been estimated to vary between 5 and 15% depending on the type of corn. The effluent generated (nejayote) is a potential pollutant because of its composition and characteristics. Nejayote is highly alkaline (pH 11-12), and its solids fraction contains about 75% nonstarch polysaccharides, 11 % starch and 1.4% protein and high calcium levels. Nejayote has a chemical oxygen demand (COD) of about 25,000 mg/L, a biological oxygen demand (BOD) of 8,100 mg/L, and a suspended solids content of 20,000 mg/L. In addition to a high BDO and COD, nejayote contains nearly 310 mg of nitrogen and 180 mg of phosphorus per liter. Commercial alkaline corn processing facilities discharge alkaline wastewater in large sedimentation tanks or lagoons for disposal. Some operations dispose of some of the water by irrigating cropland or grass. Sedimentation and microbial degradation of corn solids accomplish wastewater-cleaning operations. Due to alkalinity, wastewater cannot typically be directly discharged into the environment or water streams before proper neutralization.

In large commercial establishments where efforts are focused on expending the nixtamalization process and minimizing steeping times, corn is usually cooked at high temperatures and quenched with water to rapidly reduce corn temperatures. Although this approach shortens process times, it can increase water use and, thus, increase wastewater volumes. A typical corn nixtamalization facility processing 200 tons of corn per day uses more than 50 gal of water per minute and generates nearly the equivalent amount of alkaline wastewater in a 24-hr period.

Research is being done to find effective, economical alternatives to alkaline waste disposal. One approach has been to remove the suspended solids from the wastewater steam by vacuum filtration and then use reverse osmosis to remove dissolved solids. Membranes used in this type of system retain nearly all solids and let only water pass through. However, these membranes are expensive.

In recent years, several processes have been developed for nixtamal, masa, and masa flour production. Many of these processes have been developed to shorten the cooking or steeping process or increase production rates. In one example masa flour production process, the whole grain is partially cooked in a hot alkaline solution to partially gelatinize the starch. The corn is then de-branded, flash-dried, and milled. Several processes use ground corn or corn flour as the starting material and use extrusion or continuous cooking to produce masa or masa flour. These procedures, however, have not completely overcome the waste-generation problems associated with the traditional masa production process. Problems related to product quality, equipment and process costs, and production rates are also sometimes encountered with processes using ground corn material (flour or meal) mixed with lime or using extrusion.

To partially overcome the problem in the quality of masa and tortilla some industrial producers of instant corn flour use gums as carboxymethyl cellulose, guar, xanthan and Arabic gums to facilitate keeping properties and functionality in tortillas and helping to counteract the effects of lack of pericarp gums due to shorter steeping times during the cooking of corn grains. The flour producers remove the pericarp that affects the color of the products. However, tortilla manufacturers know that rehydrated dry masa flour has different rheological properties compared to fresh masa. Rehydrated dry masa flour is less plastic and cohesive than fresh masa. Also, the products made from dry masa flour stale faster. Similarly, the quality of the texture and flavor of tortilla made from instant corn flour is lower than that made from fresh masa.

Consequently, a need exists for a process for making masa that eliminates the lye steeping step, eliminates the discharge of caustic and wasteful effluent, shortens processing times, yet produces a masa that is rheologically similar to masa produced by the traditional nixtamalization process. Ideally, such process should be accomplished with minimal material costs and with equipment that is normally available to producers of fresh masa made by the traditional process. In short, the method should be economical, environmentally friendly, and produce an end product that is indistinguishable from the same type of product made by the traditional process.

US 6,068,873 discloses a continuous process for the production of flour and dough using separate components of cereal grain. Masa flour and dough is made by blending component parts of corn kernels, hydrating the blend, tempering the blend and cooking the tempered blend. Depending upon the desired final product, lime may be mixed with the hydrated blend. The amount of lime mixed with the hydrated blend is said to range from about 0.00 to about 1.0 wt% of the hydrated blend.

US 6,025,011 discloses a process for producing masa corn flour comprising sifting kernel corn to separate a coarse particle fraction, which is then heated with lime and water to a temperature preferably about 99°C or less, for up to about 15 minutes. A fine particle fraction from the sifting step is then combined with the heat treated coarse fraction. The resultant mixture is then dried under a vacuum while continuously mixing for at least 20 minutes to obtain a dried masa flour.

### SUMMARY OF THE INVENTION

The present invention provides a method for making fresh corn masa, as defined in claim 1. Also provided is corn masa as defined in claim 22.

The process for the production of fresh corn masa is by means of an instant nixtamalization process. This process minimizes the crucial steps of the traditional method, so that rheological characteristics and general quality of the traditional tortillas and tortilla chips are retained, but such that no fraction of the corn grain is lost, no polluting effluents are generated, and no steeping times are needed.

Also, with embodiments of the present invention, corn endosperm gelatinization process is achieved with the minimal water quantity in no more than 30 minutes. The process may be completed by a mixing unit operation at high speed which speeds diffusion of water into the internal regions of the grain fractions. Water may be added in sufficient quantity to appropriately hydrate and gelatinization of starch, so no water is wasted. The combined action of water, gelatinization agents and temperature produce a cooked milled suitable for the production of fresh masa. By controlling the cooking parameters (mixing time, cooking temperature, energy, power, temperature, time, and gelatinization agents content), it is possible to obtain masa suitable for the production of fresh masa and its products.

The instant nixtamalization process offers several advantages over traditional nixtamalization processes for tortilla chip production. The essential step of cooking corn in a solution with an excess amount of lime (calcium hydroxide) is no longer required, which eliminates the production of highly alkaline waste (pH 9-12) streams *(nejayote)* containing suspended corn solids. Overall, the new process results in higher product yields because it eliminates corn solids losses in the waste streams.

Much of the existing equipment and setup typically used for nixtamalization and masa flour production can be used for the instant process. The process can be conveniently adapted for use with continuous cooking and mixing equipment.

Hard as well as soft corn hybrids of white or yellow dent corn types can be subjected to instant nixtamalization. For traditional nixtamalization, corn processors often prefer to use harder corn types due to reduced corn solids loss and superior flour functionality. Additionally, corn processors require integrity of the corn kernel to minimize losses and increase the process control. The instant nixtamalization process of the present invention can be used with soft corn hybrids without adversely influencing corn solids loss and flour characteristics.

Masa produced using instant nixtamalization usually has a light, acceptable color and a texture similar to masa obtained by traditional method. Food products prepared from instant nixtamalized masa have an appearance, flavor, and texture similar to those prepared from many commercially available nixtamalized corns (masa). Fresh-masa table tortillas typically have subtle flavors and textures rarely duplicated by instant masa flour products. Yet, the present invention can duplicate such results.

Process time using this new nixtamalization procedure has been reduced substantially from 18 hours (average) to, in one embodiment, 15 or 20 minutes. This is very important for corn products manufacturers, because they are able to make changes in their production schedule with almost no production cost impact. Additionally, quality can be controlled better in a lower production cycle time.

Using the traditional nixtamalization process 18 liters of water is required per each kilogram of raw corn to produce fresh masa. About one liter of this is retained in order to produce masa with the proper rheological characteristics suitable for making tortillas. In consequence, 17 liters of water is typically discarded and is a highly dangerous and contaminant effluent (cooking liquor or nejayote and water from washing procedure). The process of the present invention may eliminate all effluents. Considering that water is no easily available natural resource in some countries, the substantial reduction in the use of water with embodiments of this invention (94%) has a very important ecological impact.

Thus, the process of the present invention for making masa may eliminate the lye steeping step, eliminates the discharge of caustic and wasteful effluent, shorten processing times, yet produce a masa that is rheologically similar to masa produced by the traditional nixtamalization process. In one embodiment, the process can be accomplished with minimal material costs and with equipment that is normally available to producers of fresh masa made by the traditional process. Embodiments of the method of the invention may be economical, environmentally friendly, and produce an end product that is indistinguishable from the same type of product made by the traditional process.

### BRIEF DESCRIPTION OF THE DRAWINGS

Figure 1 is a schematic flow chart showing the processing steps of one embodiment of the present invention; and
Figure 2 is a schematic illustration of a preferred embodiment of the cooler unit operation of the present invention.

### DETAILED DESCRIPTION

The invention refers to an instant nixtamalization process for the production of fresh corn masa, and their derivatives. With the method of the present invention it is possible to make fresh masa and its derivatives without using the lime solution steeping step.

In general the starting materials used in the process are corn pericarp, tip cap, germ, and endosperm fractions, water, and gelatinization agents. The corn fractions can be of any genotype and should be free of impurities and foreign material. These fractions of pericarp, tip cap, germ, and endosperm can be obtained by milling or decorticating the whole corn grain or by purchasing fractions from the corn dry milling or corn wet milling industries. When using the term corn "fractions" herein, it is intended that such means a specific portion of the corn kernel (such as the pericarp) that has been ground separately from other portions of the corn kernel (such as the endosperm). Thus, the present invention's use of blended corn "fractions" is distinct from the prior art practice of using ground corn kernel, or just using the endosperm fractions, when attempting to produce suitable instant masa.

As previously mentioned, corn solids are lost during the traditional nixtamalization process when the nejayote or generated effluent is discarded. The loss of these solids necessarily changes the ultimate characteristics of the masa that is produced by grinding the remaining corn. Regardless of the process used, therefore, similar masa characteristics cannot be reproduced by simply grinding whole corn to be used as a starting material for a shortened nixtamalization process, as has been suggested by the prior art. Consequently, in order to arrive at an end product having the same flavor and rheological properties as an end product produced by the traditional nixtamalization process, the instant invention uses various corn fractions in combination to mimic the characteristics of the corn that remains after the nejayote is disposed of in the traditional process.

By way of example, the traditional nixtamalization process removes much of the pericarp and some tip cap from the steeped corn kernels. Consequently, grinding corn kernels having the pericarp and tip cap intact and then subjecting it to a shortened nixtamalization process would not emulate the flavor characteristics and rheological properties of the end product when arriving at the dough produced by such procedure. Likewise, using a corn fraction consisting of only endosperm will not emulate traditionally made products, as some of the pericarp, tip cap, and germ does remain after rinsing the nixtamalized kernel. Rather than taking this approach, the instant invention uses a mixture, or blend, of corn fractions in order to reproduce the corn basis for the masa. The precise formulation for these corn fractions is dependent on the type of product to be emulated (for example, a specific formulation is used for each of corn chips, tortilla chips, and corn tortillas). In general, however, the process for production of fresh corn masa or nixtamalized , corn flour of the instant invention utilizes by weight percentage a dry mixture of from about 0 to about 10% of pericarp fractions, with a preferred range of between 3 and 7%, and a most preferred amount of about 5%, from about 0 to about 15% germ fractions, with a preferred range of about 1 to about 5%, and a most preferred amount of about 3%, and from about 0 to about 95% endosperm fractions (coarse and fine grits combined), with a preferred range of about 90 to about 93%, and a most preferred amount of about 91.6%. The precise fractions used, as well as the particle size distribution of each fraction, can be adjusted by one skilled in the art in order to obtain the desired rheological properties required for the product to be made from the fresh masa.

In a preferred embodiment, the instant invention uses a mixture of fine corn grits, coarse corn grits, and a mixture of hulls (pericarp), germ, and tip-cap (hereinafter "HGT") which is a sub-product obtained from the corn milling process. This HGT component is quite inexpensive, yet is quite useful in the instant invention in mimicking a traditionally-produced masa dough.

Fine corn grits comprise an endosperm fraction, where "fine" is generally defined as the fraction of milled corn with a particle size distribution characterized by very small particles, typically on average 150 microns or below.

An example particle size distribution for fine corn grits is shown in Table 1 below.

**Table 1: Fine Corn Grits Particle Size Distribution**

| Mesh | Retention (%) |
|---|---|
| Tyler sieve No. 60 | 8.6 |
| Tyler sieve No. 70 | N.A. |
| Tyler sieve No. 80 | 30.9 |
| Tyler sieve No. 100 | 13.9 |
| Bottom | 44.2 |

Table 2 shows a component breakdown by percentage of weight for an example for fine corn grits as well.

**Table 2: Fine Corn Grits Weight Percent**

| Parameter | Min. | Max. |
|---|---|---|
| Moisture, % | 11 | 13 |
| Ashes, % | 0.4 | 0.5 |
| Fat, % | 0.9 | 1.8 |
| Protein, % | 6 | 8.5 |
| Crude fiber, % | 0.8 | 11 |
| Carbohydrates, % | 80.3 | 75.7 |

Coarse corn grits likewise comprise an endosperm fraction, where "coarse" is generally defined as the fraction of milled corn with a particle size distribution characterized by medium particle sizes, typically on average between 250 and 350 microns. Tables 3 and 4 provide an example of the particle size distribution for a coarse corn grit sample and a weight percentage breakdown of the composition of said coarse corn grits.

**Table 3: Coarse Corn Grits Particle Size Distribution**

| Mesh | Retention (%) |
|---|---|
| Tyler sieve No. 16 | 0 |
| Tyler sieve No. 20 | 0 |
| Tyler sieve No. 25 | 0.1 |
| Tyler sieve No. 30 | 0.2 |
| Tyler sieve No. 40 | 36.3 |
| Tyler sieve No. 50 | 48.5 |
| Tyler sieve No. 60 | N.A. |
| Tyler sieve No. 70 | N.A. |
| Bottom | 14.9 |

**Table 4: Coarse Corn Grits Weight Percent**

| Parameter | Min. | Max. |
|---|---|---|
| Moisture, % | 11 | 13 |
| Ashes, % | 0.4 | 0.5 |
| Fat, % | 0.9 | 1.8 |
| Protein, % | 6 | 8.5 |
| Crude fiber, % | 0.8 | 1 |
| Carbohydrates, % | 80.3 | 75.7 |

The HGT component of the raw materials used with the invention is a mixture of hulls, germ and tip cap generally obtained as sub product of dry or wet corn milling process. Its composition and relative proportions of each structures (hells, germ and tip cap), depends on the nature of used corn varieties. An example of a suitable HGT component is corn bran manufactured by MAIZORO S.A. de C.V. of Mexico City. By way of example only, Tables 5 and 6 below provide detail on a sample of an HGT component with regard to particle size and component weight percentages.

**Table 5: HGT Particle Size Distribution**

| Mesh | Retention (%) |
|---|---|
| Tyler sieve No. 16 | 68.8 |
| Tyler sieve No. 20 | 8.6 |
| Tyler sieve No. 25 | 3.6 |
| Tyler sieve No. 30 | 2.8 |
| Tyler sieve No. 40 | 3.3 |
| Tyler sieve No. 50 | 2.5 |
| Tyler sieve No. 60 | N.A. |
| Tyler sieve No. 70 | N.A. |
| Bottom | 10.4 |

**Table 6: HGT Weight Percent**

| Parameter | Min. | Max. |
|---|---|---|
| Moisture, % | 8.69 | 8.68 |
| Ashes, % | 3.96 | 4.15 |
| Fat, % | 10.27 | 11.15 |
| Protein, % | 11.1 | 11.71 |
| Crude fiber, % | 6.54 | 5.96 |
| Carbohydrates, % | 59.44 | 58.35 |

The present invention involves the mixing of these corn fractions with various gelatinization agents, which will be discussed in further detail below. A typical breakdown by weight percentage of the dry materials used with the inventive processes described herein is shown below in Table 7.

**Table 7: Formulation**

| Raw Materials | % |
|---|---|
| Fine corn grits | 49.1 |
| Coarse corn grits | 42.5 |
| HGT | 8 |
| Gelatinization agents | 0.4 |
| Total | 100 |

Thus, in the embodiment disclosed, the endosperm fraction (made up of fine and coarse grits) amounts to about 91.6% by weight of the dry mixture or roughly 92% of the total weight of corn fractions used. The ratio of endosperm fraction with HGT fraction, as well as the ratio of fine to coarse grains within the endosperm fraction, can be adjusted through experimentation by one skilled in the art in order to obtain the desired characteristics of the masa produced. A preferred range for the endosperm fraction is in the range of 89 to 95% by weight of the total of corn fractions, with a most preferred range of between about 91% to about 93% by weight of the total corn fractions. A preferred range for the weight percentage of the hulls, germ, and tip cap fraction is between 5 and 11% of the total corn fractions, with a most preferred range of between about 7 and about 9% of the total corn fractions. The ratio of fine corn grits to coarse corn grits (both being part of the endosperm fraction) can vary considerably. But a preferred range is between 43% to 63% fine corn grits and 36% to 56% coarse corn grits as a weight percentage of the endosperm fraction. The most preferred ratio, as disclosed in Table 7 above, amounts to 53.6% by weight fine corn grits and 46.4% by weight coarse corn grits as a percentage of the endosperm fraction.

The first unit operation involved in the present invention comprises first mixing all dry ingredients, comprising various corn fractions and gelatinization agents. This admix is then thoroughly hydrated by adding water, again in a mixer. This hydration step, in a preferred embodiment, is considered a severe mixing (or high sheer), which is required to insure thorough hydration in a short period of time. The resultant dough requires no exposure to a lye solution, nor does it produce any waste effluent.

In the process described herein, the use of certain metal salts as gelatinization agents provides for the instant nixtamalization process without the need for the traditional nixtamalization steeping step. One of the most effective gelatinization agents is magnesium oxide (MgO). However, the use of MgO alone does not provide for the taste of the finished product typically associated with the nixtamalization process. The use of Calcium Oxide (CaO) in combination with MgO, however, does achieve such result. The inventors have found that CaO, therefore, is a required component if the traditional flavor imparted by the nixtamalization process is desired in the end product. The invention uses as the gelatinization agent component of the dry materials by weight, between 58% and 88% CaO and between 12% and 32% MgO, with a preferred ratio of about 78% CaO to about 22% MgO. A weight ratio of CaO to MgO of between about 3:1 and about 4:1 has been found to be acceptable in most applications.

In the preferred embodiment of this process, the hydrolysis and hydration of the corn fractions is achieved by subjecting the endosperm fraction with the addition of proper amounts of the HGT fraction to a rapid cooking at high temperatures. Reduction in steeping time is accomplished with high sheer mixing and temperature, which speeds diffusion of water into the internal regions of the grain fractions. As in the traditional process, starch granules are not damaged because, when grains are cooked, they are fully immersed in water, so water availability is not a limiting factor for starch granule swelling. In addition, granule swelling takes place inside the grain matrix, helping to protect them. The inclusion of the pericarp and germ enriches the textures and nutritional quality of the final product. The hydrolysis (adding gelatinization agents) of the pericarp releases gums, conferring appropriate texture to the masa with equal characteristics as those produced by the traditional process.

Water is added only in sufficient quantity to appropriately hydrate and hydrolyze the pericarp, so no water is wasted. In a preferred embodiment, between about 55 liters and about 75 liters of water is used per 100 kg of dry ingredients (corn fractions and gelatinization agents) depending on the ingredients used and the specific process parameters. Using the specific ingredients and process parameters disclosed herein, about 65 liters of water per 100 kg of dry ingredients is preferred. The combined action of water, gelatinization agents, temperature, and sheer force produces a cohesive fresh masa to be sheeted. By controlling the cooking parameters (mixing time, cooking pressure, temperature, dwell, and gelatinization agents content), it is possible to obtain masa suitable for use in producing various food products.

The processing step of cooking the corn fractions, gelatinization agents, and water can be done in a scraped surface heat exchanger cooker, microwave oven, joule cooking chamber, IR cooker or in a pressurizing chamber, etc. Thus, the cooking of the corn fractions with gelatinization agents and water can be accomplished by any type of heat transfer process, such as scraped surface heat exchanger, and can be done in any commercial equipment with temperatures varying from 50 to about 300 °C. The cooking within a pressurizing chamber can be achieved under a range of pressures between 1 and 100 atmospheres, with time periods between 0 and 30 minutes employing periodical stirring, and temperature ranges between 50 to 150 °C. The microwave oven for corn fraction cooking can be a commercial one with power ranging from 500 watts to several Kilowatts, depending on the mass load. The cooking containers inside microwave ovens must withstand temperatures from 50 to 120 °C, and heating periods of 1 to 60 minutes. Additionally, gelatinization of starch is achieved using a mixture of calcium oxide and magnesium oxide.

In one embodiment, the corn fractions and gelatinization agents are hydrated in the presence of water at room temperature, for a period between 1 and 7 minutes. Also, in this hydration step, a pressurizing chamber can be used. The chamber can be fitted with a device that allows the administration of heat by any vehicle, such as hot water, direct fire, hot vapor, joule heating, infrared radiation, microwave radiation, or any other heating system. Similarly, the pressurizing chamber can use an inert gas in order to increase the pressure and to reduce the cooking time.

The concentration of the gelatinization agent may vary from 0.1 to 4% by weight of the dry admix and can be substituted by any other compound causing pericarp hydrolysis and hydration of the germ-endosperm fractions in presence of water. The concentration of the gelatinization agent recommended in a preferred embodiment is about 0.3% to about 0.4% by weight of dry raw materials (admix). Water concentration used for hydration can vary from 10% to 70% by weight, with a preferred amount of about 50%, and its temperature can range from 0 to 100 °C, with a preferred range of 20 to 30°C.

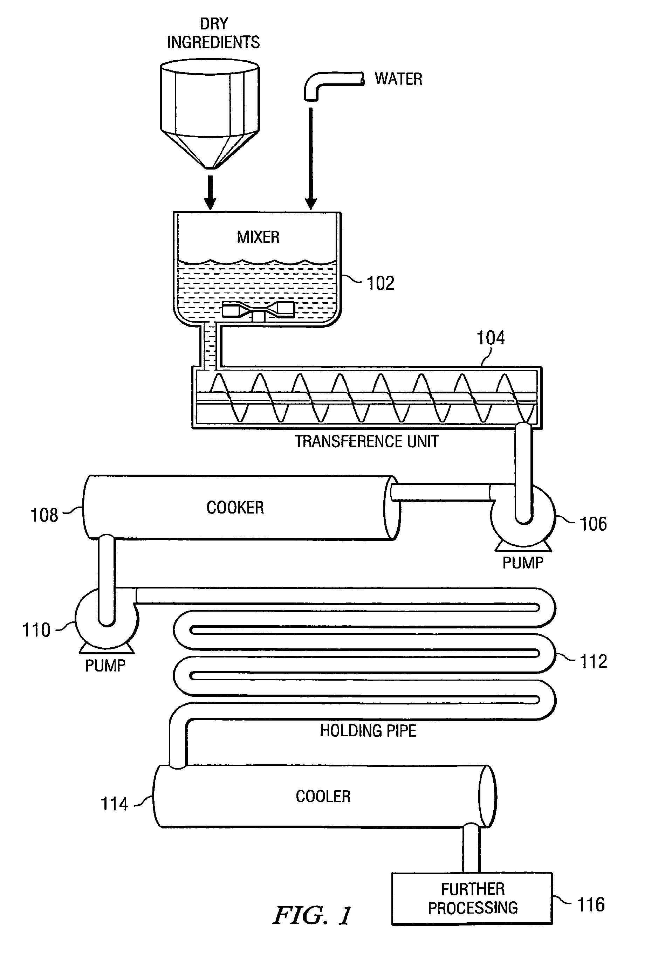

One embodiment of the invention is best understood with reference to Figure 1, which is a schematic flow chart highlighting the various unit operations involved. First, the dry components (fine corn grits, coarse corn grits, HGT, and a mixture of gelatinization agents) are introduced into a mixer 102 for thorough blending of the dry ingredients. The preferred order of addition of the dry components is first the fine corn grits, then the coarse corn grits, then the HGT fraction, and lastly the gelatinization agents, although this order is not required. The mixer 102 can be, for example, a ribbon blender, in which instance the dry mixture should be blended for approximately 3 to 5 minutes at between 100-150 rpm. This dry mixture is then hydrated by the addition of water to the mixer 102. In a preferred embodiment, the water is added at ambient temperature in a ratio of 65 liters of water per each 100 kilograms of dry ingredients. The amount of water can be adjusted in order to arrive at the proper consistency of the end product with the goal in mind that substantially all water added is retained by the masa produced, such that no waste water byproduct is generated. Again, using the example of a ribbon blender, the hydration step typically ranges between 5 and 7 minutes long at a mixing speed of 100 to 120 rpm, which characterizes a severe mixing or high sheer mixing. The moisture level of the hydrated admix in a preferred embodiment is approximately 50% by weight.

While this mixing and hydration step is described herein as a batch unit operation, it should be understood to those skilled in the art that a continuous mixing process could likewise be used. In the instance of a batch mixing unit operation, one or more mixers 102 can be emptied into a transference unit 104, such as an auger or screw conveyor, in order to make the entire operation continuous. This transference unit 104 collects the hydrated admix, which is then transferred by a pump 106 or other means to a cooker 108.

The cooker 108 in a preferred embodiment is a scraped surface heat exchanger which uses hot water as its energy source. This hot water (not shown) enters the heat exchanger at about 55°C to about 80°C, or in a preferred range of about 68°C to about 72°C. The hydrated admix is maintained at a pressure, in a preferred embodiment, of 3.45 to 4.14 bars (50 to 60 psig) and departs the cooker 108 as a partially gelatinized dough with a temperature in the range of about 60°C to about 75°C, and preferably between about 69°C and about 70°C. This dough is then transferred by a pump 110 or other means into a holding pipe 112 or other holding equipment known in the art in order to allow the cooking and gelatinization processes to run their course. In one embodiment, the holding pipe is a stainless steel pipe 12 meters in length and 2.5 inches in diameter. The dwell time in such holding pipe should be in the range of 3 to 12 minutes, preferably between 5 and 9 minutes, and most preferably for about 7 minutes. The dough exits the holding pipe 112 at the desired level of gelatinization needed for the further processing 116 required to produce the end product. In other words, the dough that exits the holding pipe 112 is now fresh masa having the same rheological properties and other characteristics of masa made through the traditional nixtamalization process. The inventors determine if the masa at this stage is of the proper characteristics, including rheological characteristics, by evaluation using "RVA" profiles. RVA refers to Rapid Visco-Analyzer, which is an apparatus commonly used in the industry to characterize viscosity behavior. RVA profiles are well known in the food industry as a tool for investigating the hydration and gelling behavior of starches. The RVA method typically involves controlled heating and cooling of flour or starch suspensions in water at concentrations of between 5 and 40% w/w. If, in fact, the masa demonstrates the RVA profile desired, gelatinization must be stopped at this stage to prohibit further changes in the characteristics of the masa and further gelatinization.

In order to stop the gelatinization process at this point, the masa is then put through a cooler 114, which in one embodiment is again a scraped surface heat exchanger. This heat exchanger uses cold water (not shown) at a temperature in the range of between 3°C and 10°C, or a preferred range between 5°C and 7°C, in order to cool the dough to below 50°C, but preferably to about 40°C. The dough pressure inside the cooler 114 is typically between 4.14 to 9.89 bars (60 and 100 psig), with a preferred pressure range of between 4.83 to 5.52 bars (70 and 80 psig)

An alternative and preferred embodiment of the cooler unit operation 114 uses cooling wheels instead of a scraped surface heat exchanger. A benefit in using cooling wheels as the cooler unit 114 is the elimination of the possibility of reaching high pressures inside the cooler unit 114 when the equipment used is a scraped surface heat exchanger. As the masa cools in the cooler 114, it becomes more viscous. Consequently, pressure inside a contained cooler unit 114, such as a scraped surface heat exchanger, begins to build, thus limiting throughput if the pressure buildup is not addressed. The use of cooling wheels fully addresses this issue.

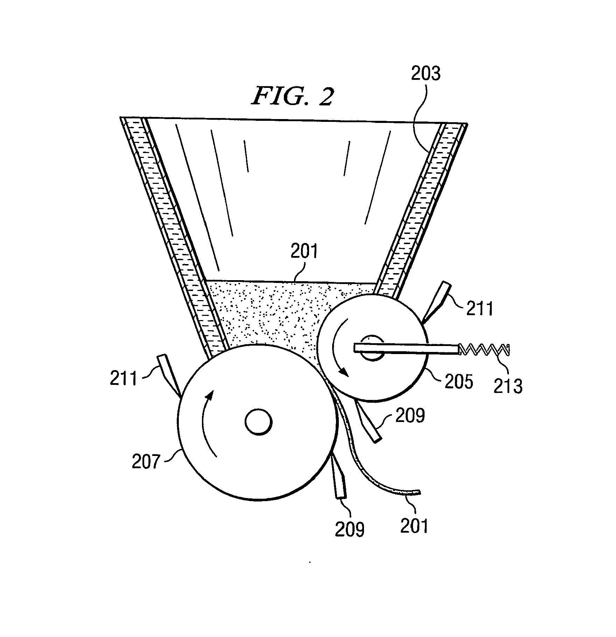

Cooling wheels are regularly used in the confectionary industry to cool highly viscous syrups, such as nougat, chocolate, and marmalade. In general, they are used to cool liquids that should be sheeted as a requirement of the confectionary process. An example of such equipment used in a preferred embodiment for the cooling unit 114 is a model named Moduslab 300 manufactured by Tanis Confectionary in the Netherlands. An example of a cooler unit operation 114 using the cooling rollers embodiment is illustrated in Figure 2.

Figure 2 is a schematic diagram illustrating a preferred embodiment of the cooling rollers. Dough 201 is deposited from the holding pipe 112 of Figure 1 into a hopper 203 shown in Figure 2. If desired, the dough 201 can be kept warm in the hopper 203 by a warm water circuit or jacket around the hopper 203. The dough 201 is then pressed or sheeted through a gap between counter-rotating rollers or wheels 205, 207. Using the example of the Moduslab 300, the top roller or wheel 205 has a diameter of 445 millimeters, while the bottom roller or wheel 207 has a diameter of 645 millimeters. The clearance between the top and the bottom rollers 205, 207 can be adjusted from 1 millimeter to 30 millimeters using an adjusting mechanism 213. Each of the rollers 205, 207 have their own drive equipment with a frequency converter (not shown). Each of the rollers 205, 207 are also equipped with one or more scraping devices 209, 211 to remove the masa or dough 201 from the surface of the rollers 205, 207. Each of the rollers 205, 207 also have separate connections for a chilling medium, in this case cooling water, which circulates into the interior of the rollers 205, 207, and then out again to be cooled (not shown) in order to perform the heat transfer function of cooling the dough 201 as it is sheeted by the two rollers 205, 207. Heat is transferred from the dough 201 through the surfaces of the rollers 205, 207 and into the cooling water which flows through the interior of each roller 205, 207. As a result, the dough 201 is cooled from a temperature of above 59°C to a temperature of below 51°C during the sheeting performed by the rollers 205, 207.

The cold water used as a cooling medium in the cooling rollers 205, 207 is typically maintained at a temperature in the range of between 3°C and 10°C, or a preferred range of between 5°C and 7°C, in order to cool the dough to below 50°C, but preferably to about 40°C, as it exits the cooler unit in a sheeted condition. Dough 201 exiting from the holding pipe 112 of Figure 1 is fed into the hopper 203 of Figure 2 at atmospheric pressure. The dough 201, upon entering the hopper 203, is at a temperature in the range of about 60°C to about 75°C, and preferably between 69°C and 70°C. In a preferred embodiment, the velocity of the lower roller 206 is between 0.2 to 1.4 rpm, or in a preferred range of between 0.4 to 0.9 rpm. The gap between the upper 205 and lower 206 cooling wheels is typically between 0.1 to 1.8 millimeters, or a preferred range of between 0.2 to 1.4 millimeters. Masa 201 exiting from the cooling rollers 205, 207 has a temperature between 38°C to 45°C, or preferably in a range between 37°C to 40°C. With the operating conditions described, it has been determined that the cooling roller embodiment of the cooler unit has a capacity to cool masa at the rate of 400 kilograms per hour per unit. When the dough 201 exits the cooling rollers 205, 206, it is now fully processed and cooled fresh masa having rheological properties quite similar to that of masa produced by traditional nixtamalization and processes.

Returning to Figure 1, it bears repeating that when the masa exits the cooler 114, it is now fully processed and cooled fresh masa having rheological properties quite similar to that of masa produced by the traditional nixtamalization process. The process beginning with the hydration step to the end of the cooling step typically takes between about 20 and about 25 minutes and no water is wasted. The moisture level of such masa at this point is approximately 47%.

The masa is then used in further processing steps 116 for which masa produced by the traditional nixtamalization steps are applied. For example, these further processing steps 116 might include sheeting, cutting, drying, frying, seasoning, and packaging in a manner typical and known in the art for producing tortilla chips. Alternatively, the masa can be extruded and cooked or processed in any number of different manners known in the art for the production of corn chips, corn tortillas, taco shells, tamales and, tortilla chips.

The present invention involves a method that minimizes the crucial steps of the traditional method, so the rheological characteristics and general quality of the traditional tortillas are retained. Yet, no fraction of the corn grain is lost, no polluting effluents are generated, and no long steeping times are needed, thus saving energy as well. Instant nixtamalization offers a new approach to nixtamalization in which problems with waste generation are virtually eliminated, since substantially all the water added at the hydration step is retained in the masa produced, while still producing a product similar to traditionally lime-cooked masa can be produced.

A successful instant nixtamalization process suitable for processing milled corn fractions to produce fresh masa has been developed. The system can be used to produce masa foods and snack products, such as corn tortillas, tortilla chips, corn chips, and taco shells. Masa produced with new technology has characteristics similar to traditional masas. The instant nixtamalization process eliminates the need to cook corn in a lime solution and resultant alkaline waste and wastewater generation. Instant nixtamalization offers an alternative to traditional nixtamalization that can reduce waste generation at its source, use less energy to produce, and minimize investment in expensive waste-treatment systems.

## Claims

1. A method for making fresh corn masa, said method comprising the steps of:
a) Mixing corn fractions with CaO thereby forming a corn-based admix;
b) Hydrating said corn-based admix;
c) Heating said hydrated corn-based admix to a temperature of between about 50°C and about 150°C;
d) Holding said hydrated corn-based admix at a temperature of between about 50°C and about 150°C for between 0 and about 30 minutes; and
e) Cooling said hydrated corn-based admix immediately after said holding step d) to below 50°C, thereby making fresh masa;
**characterized in that** step a) comprises mixing the corn fractions with another gelatinization agent, said other gelatinization agent consisting of MgO.

2. The method of Claim 1 comprising mixing an uncooked corn endosperm fraction, with an uncooked corn hulls, germ and tip cap fraction, wherein said hulls, germ, and tip cap fraction is between about 4 and 12% by weight of said corn fractions, to make the corn fractions of step a).

3. The method of Claim 2 wherein endosperm fraction comprises between 44% and 64% by weight of fine corn grits and between 36% and 56% by weight of coarse corn grits.

4. The method of Claim 2 wherein the hulls, germ, and tip cap fraction is between about 7 and about 9% by weight of said corn fractions.

5. The method of Claim 4 wherein the endosperm fraction is between about 91 and 93% by weight of said corn fractions.

6. The method of Claim 2 wherein the cooling step e) is accomplished using cooling rollers.

7. The method of Claim 1 comprising mixing corn fractions comprising fine grits and coarse grits, to make the corn fractions of step a) and further comprising the step of:
f) sheeting said hydrating corn-based admix immediately after said holding step e) with cooing rollers, thereby making fresh masa.

8. The method of Claim 7 wherein the corn fractions comprise a pericarp fraction of between about 3% to about 7% by weight of the corn-based admix of step a).

9. The method of Claim 7 wherein the corn fractions comprise a germ fraction of between about 1% to about 5% by weight of the corn-based admix of step a).

10. The method of Claim 7 wherein the corn fractions comprise an endosperm fraction of between about 90% to about 93% by weight of the corn-based admix of step a).

11. The method of Claim 2 or Claim 7 wherein the CaO and at least one other gelatinization agent comprise between about 0.3% and about 0.4% by weight of said corn-based admix of step a).

12. The method of Claim 1 wherein the weight ratio of CaO to MgO of step a) is between about 3:1 and about 4:1.

13. The method of Claim 2 or Claim 7 wherein the hydrating of step b) comprises adding between 55 liters and 75 liters of water per 100 kg of corn-based admix.

14. The method of Claim 13 wherein said water is added at between about 20°C and about 30°C.

15. The method of Claim 2 or Claim 7 wherein said hydrating of step b) comprises mixing water with said corn-based admix for between about 1 and about 7 minutes.

16. The method of Claim 2 or Claim 7 wherein steps b) through e) are accomplished from between about 20 and about 25 minutes.

17. The method of Claim 2 or Claim 7 wherein substantially all the water added at the hydrating of step b) is retained in the fresh masa produced at step e).

18. The method of Claim 2 or Claim 7 wherein the admix is heated in step c) to between about 55°C and about 80°C.

19. The method of Claim 2 or Claim 7 wherein the heating of step c) takes place under a pressure of between about 50 psig to about 60 psig.

20. The method of Claim 2 or Claim 7 wherein the holding of step d) occurs at between about 60°C and about 75°C for between about 5 and about 9 minutes.

21. The method of Claim 2 or Claim 7 wherein the holding of step d) takes place until the hydrated corn-based admix exhibits a desired RVA profile.

22. Corn masa produced by the method of Claim 2.

23. A tortilla chip produced by using the masa of Claim 22.

24. A tortilla produced by using the masa of Claim 22.

25. A taco shell produced by using the masa of Claim 22.

## Patentansprüche

1. Verfahren zum Herstellen frischer Maismasa, umfassend:
a) Vermischen von Maisfraktionen mit CaO, um eine Mais-basierte Mischung zu bilden;
b) Hydratisieren der Mais-basierten Mischung;
c) Erhitzen der hydratisierten Mais-basierten Mischung auf eine Temperatur zwischen ca. 50 °C und ca. 150 °C;
d) Belassen der hydratisierten Mais-basierten Mischung bei einer Temperatur zwischen ca. 50 °C und ca. 150 °C für zwischen 0 und ca. 30 min;
e) Abkühlen der hydratisierten Mais-basierten Mischung unmittelbar nach dem Belassen aus Schritt d) auf unter 50 °C, um so frische Maismasa herzustellen; **dadurch gekennzeichnet dass** Schritt a) Mischen der Maisfraktionen mit einem weiteren Gelatinierungsagens umfasst, wobei das andere Gelatinierungsagenz aus MgO besteht.

2. Verfahren gemäß Anspruch 1, umfassend Mischen einer nicht gegarten Maisendosperm Fraktion mit einer nicht gegarten Fraktion aus Hülsen, Keim und Hilum, wobei die Fraktion aus Hülsen, Keim und Hilum zwischen ca. 4 und 12 Gew.-% der Maisfraktionen ausmacht, um die Maisfraktionen aus Schritt a) herzustellen.

3. Verfahren gemäß Anspruch 2, wobei die Endospermfraktion zwischen 44 und 64 Gew.-% feinen Maisgrieß und zwischen 36 und 56 Gew.-% groben Maisgrieß umfasst.

4. Verfahren gemäß Anspruch 2, wobei die Fraktion aus Hülsen, Keim und Hilum zwischen ca. 7 und 9 Gew.-% der Maisfraktionen ausmacht.

5. Verfahren gemäß Anspruch 4, wobei die Endospermfraktion zwischen ca. 91 und 93 Gew.-% der Maisfraktionen ausmacht.

6. Verfahren gemäß Anspruch 2, wobei der Abkühlungsschritt e) unter Verwendung von Kühlrollen ausgeführt wird.

7. Verfahren gemäß Anspruch 1, umfassend Vermischen von Maisfraktionen umfassend feinen Grieß und groben Grieß, um die Maisfraktionen aus Schritt a) herzustellen und weiter umfassend den Schritt: f) Bedecken der hydratisierten Mais-basierten Mischung unmittelbar nach dem Schritt des Belassens e) mit Kühlrollen, um so frische Maismasa herzustellen.

8. Verfahren gemäß Anspruch 7, wobei die Maisfraktionen eine Perikarpfraktion von zwischen ca. 3 und 7 Gew.-% der Mais-basierten Mischung aus Schritt a) umfassen.

9. Verfahren gemäß Anspruch 7, wobei die Maisfraktionen eine Keimfraktion von zwischen ca. 1 und ca. 5 Gew.-% der Mais-basierten Mischung aus Schritt a) umfassen.

10. Verfahren gemäß Anspruch 7, wobei die Maisfraktionen eine Endospermfraktion von zwischen ca. 90 und 93 Gew.-% der Mais-basierten Mischung aus Schritt a) umfassen.

11. Verfahren gemäß Anspruch 2 oder Anspruch 7, wobei das CaO und das mindestens eine weitere Gelatinierungsagens zwischen ca. 0,3 und ca. 0,4 Gew.-% der Mais-basierten Mischung aus Schritt a) umfassen.

12. Verfahren gemäß Anspruch 1, wobei das Gewichtsverhältnis von CaO zu MgO in Schritt a) zwischen ca. 3:1 und ca. 4:1 ist.

13. Verfahren gemäß Anspruch 2 oder Anspruch 7, wobei das Hydratisieren aus Schritt b) Hinzufügen von zwischen 55 und 75 l Wasser pro 100 kg Mais-basierter Mischung umfasst.

14. Verfahren gemäß Anspruch 13, wobei das Wasser bei zwischen ca. 20 und ca. 30 °C hinzugefügt wird.

15. Verfahren gemäß Anspruch 2 oder Anspruch 7, wobei das Hydratisieren aus Schritt b) Mischen von Wasser mit der Mais-basierten Mischung für zwischen ca. 1 und ca. 7 min umfasst.

16. Verfahren gemäß Anspruch 2 oder Anspruch 7, wobei die Schritte b) bis e) in einer Zeit von zwischen ca. 20 und ca. 25 min ausgeführt werden.

17. Verfahren gemäß Anspruch 2 oder Anspruch 7, wobei im Wesentlichen alles während des Hydratisierens in Schritt b) hinzugefügte Wasser in der in Schritt e) hergestellten frischen Masa erhalten bleibt.

18. Verfahren gemäß Anspruch 2 oder Anspruch 7, wobei die Mischung in Schritt c) auf zwischen ca. 55 °C und ca. 80 °C erhitzt wird.

19. Verfahren gemäß Anspruch 2 oder Anspruch 7, wobei das Erhitzen in Schritt c) unter einem Druck von zwischen ca. 50 psig bis ca. 60 psig stattfindet.

20. Verfahren gemäß Anspruch 2 oder Anspruch 7, wobei das Belassen aus Schritt d) bei zwischen ca. 60 °C und ca. 75 °C für zwischen ca. 5 und ca. 9 min stattfindet.

21. Verfahren gemäß Anspruch 2 oder Anspruch 7, wobei das Belassen aus Schritt d) stattfindet, bis die hydratisierte Mais-basierte Mischung ein gewünschtes RVA Profil aufweist.

22. Maismasa, hergestellt mit dem Verfahren gemäß Anspruch 2.

23. Tortilla Chip, hergestellt unter Verwendung der Masa gemäß Anspruch 22.

24. Tortilla, hergestellt unter Verwendung der Masa gemäß Anspruch 22.

25. Taco-Umhüllung, hergestellt unter Verwendung der Masa gemäß Anspruch 22.

## Revendications

1. Procédé de fabrication de purée de maïs fraîche, ledit procédé comprenant les étapes consistant à :
a) mélanger des fractions de maïs avec du CaO, en formant de ce fait un mélange à base de maïs ;
b) hydrater ledit mélange à base de maïs ;
c) chauffer ledit mélange à base de maïs hydraté à une température comprise entre 50°C environ et 150°C environ ;
d) maintenir ledit mélange à base de maïs hydraté à une température comprise entre 50°C environ et 150°C environ pendant une durée comprise entre 0 mn et 30 mn environ ; et
e) refroidir ledit mélange à base de maïs hydraté immédiatement après ladite étape de maintien d) en dessous de 50°C, en obtenant de ce fait une purée de maïs fraîche ;
**caractérisé en ce que** l'étape a) comprend une étape consistant à mélanger des fractions de maïs à un autre agent de gélatinisation, ledit autre agent de gélatinisation se composant de MgO.

2. Procédé selon la revendication 1, comprenant une étape consistant à mélanger une fraction crue d'endosperme de maïs à une fraction crue de cosses, de germe et de bout de chapeau de maïs, dans lequel ladite fraction de cosses, de germe et de bout de chapeau de maïs est comprise entre environ 4 % en poids et 12 % en poids desdites fractions de maïs, de façon à obtenir les fractions de maïs de l'étape a).

3. Procédé selon la revendication 2, dans lequel la fraction d'endo-sperme comprend entre 44 % en poids et 64 % en poids de gruau de maïs fin et entre 36 % en poids et 56 % en poids de gruau de maïs gros.

4. Procédé selon la revendication 2, dans lequel la fraction crue de cosses, de germe et de bout de chapeau de maïs est comprise entre 7 % en poids environ et 9 % en poids environ desdites fractions de maïs.

5. Procédé selon la revendication 4, dans lequel la fraction d'endo-sperme est comprise entre 91 % en poids et 93 % en poids environ desdites fractions de maïs.

6. Procédé selon la revendication 2, dans lequel l'étape de refroidissement e) est exécutée en utilisant des rouleaux de refroidissement.

7. Procédé selon la revendication 1, comprenant une étape consistant à mélanger des fractions de maïs qui comprennent des gruaux fins et des gruaux gros, de façon à obtenir les fractions de maïs de l'étape a) et comprenant en outre une étape consistant à :
f) découper en feuilles ledit mélange à base de maïs hydraté immédiatement après ladite étape de refroidissement e) avec lesdits rouleaux de refroidissement, en obtenant de ce fait une purée de maïs fraîche.

8. Procédé selon la revendication 7, dans lequel les fractions de maïs comprennent une fraction de péricarpe comprise entre 3 % en poids environ et 7 % en poids environ de le mélange à base de maïs de l'étape a).

9. Procédé selon la revendication 7, dans lequel les fractions de maïs comprennent une fraction de germe comprise entre 1 % en poids environ et5%en poids environ du mélange à base de maïs de l'étape a).

10. Procédé selon la revendication 7, dans lequel les fractions de maïs comprennent une fraction d'endosperme comprise entre 90 % en poids environ et 93 % en poids environ du mélange à base de maïs de l'étape a).

11. Procédé selon la revendication 2 ou la revendication 7, dans lequel le CaO et au moins un autre agent de gélatinisation comprennent entre 0,3 % en poids environ et 0,4 % en poids environ dudit mélange à base de maïs de l'étape a).

12. Procédé selon la revendication 1, dans lequel le rapport en poids du CaO sur le MgO de l'étape a) est compris entre 3 : 1 environ et 4 : 1 environ.

13. Procédé selon la revendication 2 ou la revendication 7, dans lequel l'étape d'hydratation b) comprend une étape consistant à ajouter entre 55 litres et 75 litres d'eau par 100 kg d'mélange à base de maïs.

14. Procédé selon la revendication 13, dans lequel ladite eau est ajoutée sous une température comprise entre 20°C environ et 30°C environ.

15. Procédé selon la revendication 2 ou la revendication 7, dans lequel ladite étape d'hydratation b) comprend une étape consistant à mélanger de l'eau avec ledit mélange à base de maïs pendant une durée comprise entre 1 mn environ et 7 mn environ.

16. Procédé selon la revendication 2 ou la revendication 7, dans lequel les étapes b) à e) sont exécutées pendant une durée comprise entre 20 mn environ et 25 mn environ.

17. Procédé selon la revendication 2 ou la revendication 7, dans lequel sensiblement toute l'eau ajoutée à l'étape d'hydratation b) est retenue dans la purée de maïs fraîche produite à l'étape e).

18. Procédé selon la revendication 2 ou la revendication 7, dans lequel le mélange est chauffé dans l'étape c) à une température comprise entre 55°C environ et 80°C environ.

19. Procédé selon la revendication 2 ou la revendication 7, dans lequel le chauffage de l'étape c) se déroule sous une pression comprise entre 50 psig environ et 60 psig environ.

20. Procédé selon la revendication 2 ou la revendication 7, dans lequel l'étape de maintien d) se fait sous une température comprise entre 60°C environ et 75°C environ pendant une durée comprise entre 5 mn environ et 9 mn environ.

21. Procédé selon la revendication 2 ou la revendication 7, dans lequel l'étape de maintien d) se fait jusqu'à ce que le mélange à base de maïs hydraté présente un profil RVA souhaité.

22. Purée de maïs produite selon le procédé de la revendication 2.

23. Chip de tortilla produite en utilisant la purée de maïs selon la revendication 22.

24. Tortilla produite en utilisant la purée de maïs selon la revendication 22.

25. Enveloppe de taco produite en utilisant la purée de maïs selon la revendication 22.
